# EUROPÄISCHE PATENTSCHRIFT

(11) **EP 1 682 624 B1**
(45) Veröffentlichungstag und Bekanntmachung des Hinweises auf die Patenterteilung: **15.07.2009**
(21) Anmeldenummer: 04797733.5
(22) Anmeldetag: 09.11.2004
(51) Int. Cl.: C09D 5/16

(54) **BIOZIDFREIE ANTIFOULING-BESCHICHTUNG ENTHALTEND EIN AUF BASALTFASERN BASIERENDES FLÄCHENGEBILDE**
BIOCIDE-FREE ANTIFOULING COATING CONSISTING OF A FABRIC BASED ON BASALT FIBRES
REVETEMENT ANTISALISSURE EXEMPT DE BIOCIDES, CE REVETEMENT CONTENANT UN MATERIAU PLAT A BASE DE FIBRES DE BASALTE

(30) Priorität: 13.11.2003 DE 10353185
(43) Veröffentlichungstag der Anmeldung: 26.07.2006
(73) Patentinhaber: Unternehmen Für Spezialfasern Sakrowski e.K., 49828 Neuenhaus (DE)
(72) Erfinder: SAKROWSKI, Klaus, Dieter, 48527 Nordhorn (DE)
(74) Vertreter: Kossak, Sabine
(86) Internationale Anmeldenummer: PCT/EP2004/012656
(87) Internationale Veröffentlichungsnummer: WO 2005/047403

(56) Entgegenhaltungen:
- WO-A-80/00554
- WO-A-96/15198
- WO-A-02/086213
- CN-A- 1 421 351
- DE-A1- 10 048 671
- FR-A- 2 608 549

## Beschreibung

Die vorliegende Erfindung betrifft die Verwendung von mineralischen Fasern oder Filamenten und von E-Glasfasern, wobei die Fasern oder Filamente einen SiO₂-Anteil von mehr als 50 Gew.-% aufweisen, in Form eines textilen Flächengebildes als biozidfreies Antifoulingmittel zum Schutz von Submersstrukturen gegen Schäden aufgrund von Adhäsion und Vermehrung von im Wasser lebenden Schadorganismen in Meereswasser oder in industriellen Wassersystemen. Insbesondere sollen Oberflächen von Submersstrukturen, wie Schiffe, Schiffsnetze, Bojen, Unterwasserseekabeln, Seezeichen, Stegen oder Brücken gegen im Wasser lebende oder liegende Schadorganismen geschützt werden, um zu verhindern, dass sie sich auf diesen Oberflächen festsetzen. Bei den im Wasser schwimmenden bzw. sich befindenden Schadorganismen handelt es sich im wesentlichen um Bakterien, Einzellem, Algen, Pilzen, Seepocken und auch Muscheln. Ein Schutz kommt auch weiterhin gegenüber den sogenannten Schiffsbohrwurm (Teredo navalis) in Frage. Hier handelt es sich um eine Muschel, die Holzbauwerke aller Art angreift und auch starke Schäden an Holzschiffen verursacht.

Erfindungsgemäß werden bevorzugt Basaltfasern und/oder Basaltfilamente eingesetzt.

Feste Oberflächen in aquatischen Lebensräumen, so genannte Hartböden, werden normalerweise innerhalb kürzester Zeit von festsetzenden, pflanzlichen und tierischen Organismen besiedelt. Dies betrifft sowohl die natürlichen Hartböden wie Felsen, Molluskenschalen, Treibholz, als auch die künstlichen Substrate wie z. B. wasserbauliche Anlagen aus Holz, Metall und Kunststoffen. Organismengesellschaften auf lebenden Substraten, z. B. Schneckengehäuse, Krebspanzer pflegt man als Aufwuchs, d. h. Epibiose zu bezeichnen, auf nicht lebenden Substraten als Bewuchs.

In aquatischen Lebensräumen kommt es daher darauf an, Oberflächen vor klebrigen Biopolymeren zu schützen, die einen Biofoulingprozess einleiten. Unter Biofouling versteht man ganz allgemein die Ablagerung lebender Organismen auf Materialoberflächen in wässeriger Umgebung, die deren physikalische Oberflächeneigenschaften negativ beeinflussen. Im maritimen Bereich unterscheidet man drei Arten von Bewuchs, nämlich Tiere, beispielsweise Muscheln und Seepocken, Algen, beispielsweise Grün- und Braunalgen und Mikroorganismen, die sich in ihrem bevorzugten Lebensraum entwickeln.

Der typische Besiedlungsverlauf einer Bewuchsgemeinschaft lässt sich wie folgt beschreiben: Zunächst bildet sich auf dem Schiffsrumpf ein makromolekularer Primärfilm, der die Anhaftung von Bakterienzellen begünstigt. Den Bakterien folgen Einzeller. Durch die von den Mikroorganismen ausgeschiedenen Stoffe entsteht ein schleimartiger Biofilm, der auf Vermehrungsstadien wie die Larven und Sporen von Makroorganismen überwiegend eine anziehende Wirkung ausübt (HOLSTRÖM & KJELLEBERG 1994).

Grundsätzlich unterscheidet man zwischen einem Mikro- und einem Makrobewuchs. Der Mikrobewuchs aus mikroskopisch kleinen Organismen wie Bakterien, einzelligen Algen (z. B. Kieselalgen), tierischen Einzellern und aquatischen Pilzen bildet häufig den oben genannten Biofilm.

Der Makrobewuchs setzt sich aus vielzelligen Pflanzen- und Tierarten zusammen. Artenreichtum und Mächtigkeit im Meerwasser übertreffen das Süßwasser um ein Zigfaches und machen den Bewuchs damit zu einem gravierenden Problem der marinen Schifffahrt.

Zum pflanzlichen Makrobewuchs zählen im Süßwasser Grünalgen, im Meerwasser ebenfalls Grünalgen, außerdem Braun- und Rotalgen sowie Schlauchdiatomeen. Auf dem Substrat "Schiffsrumpf" siedeln sich als einzellige Stadien (begeißelte Zoosporen, unbegeißelte Sporen, Zygoten oder befruchtete Einzellen) an, die koloniebildenden Schlauchdiatomeen als solitäre Stammzellen.

Die Tierarten des Makrobewuchses durchlaufen eine planktische Jugendphase, die sie als Larven im Wasser verbringen. Für den Übergang zur festsitzenden Lebensweise mit Metamorphose zur adulten Gestalt suchen sie ein Hartsubstrat auf, heften sich daran fest, wachsen heran und können dann gewichtige Bestandteile der Bewuchsgemeinschaft bilden, wie z. B. Seepocken (Balanidae), Miesmuscheln (Mytilus edulis), Moostierchen (Bryozoa), Manteltiere (Tunicata), Blumen- oder Korallentiere (Anthozoa) oder Polypentiere (Hydrozoen).

Das Fouling an Unterwasserrümpfen von Schiffen verursacht primär einen Verlust von Fahrgeschwindigkeit und sekundär auch enorme Kosten in Form von Treibstoffmehrverbrauch, Dockungskosten, Reinigungsaufwand und Bewuchsschutzmaßnahmen. Auf der anderen Seite wurden und werden durch den Gebrauch von toxischen Verbindungen quantifizierbare und nicht quantifizierbare Schäden an kommerziell genutzten und frei lebenden Meeresorganismen hervorgerufen.

In maritimer Umgebung erfährt daher jegliche Oberfläche ein Biofouling, welches eines der größten Probleme in der Marinetechnologie darstellt.

Spezielle Oberflächenbeschichtungen, sogenannte Antifouling-Beschichtungen sollen daher den Bewuchs an Schiffsrümpfen, Seewasserkonstruktionen, wie Ölplattformen, Hafenanlagen, Rohren, Seezeichen, Stegen und Brücken sowie an anderen künstlichen Unterwasserkonstruktionen verhindern. Bekannte Antifouling-Beschichtungen bzw. Antifouling-Anstriche beruhen sowohl auf Formen der mechanischen Reinigung als auch auf dem Entlassen von toxischen Bioziden aus der Beschichtung bzw. aus dem Anstrich, der z. B. auch aus Kunststoff oder aus anderen Beschichtungen hergestellt sein kann.

Eine der Produktgruppen, deren bewuchsabweisende Wirkung auf physikalischen Mechanismen beruht, ist die Gruppe der Faserbeschichtungen. Mehrere Systeme befinden sich in der Entwicklung: Es existieren mehrere Arten von Kunstfasern, wie z. B. Polyacryl-, Polyester-, Nylon-Fasern, die als kurze Einzelfasern (0,5 - 2 mm) auf frisch applizierten Epoxykleber gesprüht werden. Bei guter Applikation erzielen die Beschichtungen eine zufriedenstellende Wirkung gegen Seepocken, nicht aber gegen Algen. Außerdem ist die Applikation stark von den äußeren Bedingungen abhängig. Wind, Regen und niedrige Temperaturen beeinflussen das Applikationsergebnis stärker als bei anderen Beschichtungstypen (DAEHNE et al. 2000. WATERMANN et al. 2003). Im Bereich der Naturfasern gibt es derzeit Versuche mit Fasern aus Hanf (BIOREGION 2003). Ein Vorteil liegt in der biologischen Abbaubarkeit des Produkts. Diese Eigenschaft verhindert aber gleichzeitig, dass längere Standzeiten damit erzielt werden können. Über die Wirksamkeit dieser Faserbeschichtung ist bislang nichts bekannt.

Antihaftbeschichtungen wie z. B. aus Teflon oder Silikon verhindern aber auch zum großen Teil die Anheftung von Foulingstoffen. Beispielsweise zeigte sich bei Antihaftbeschichtungen aus Silikon im Hamburger Hafen, dass nur ein geringer oder schwach heftender Bewuchs auftrat. Dieser konnte problemlos wieder abgereinigt werden. Bei der Applikation von Silikon und der Untergrundvorbehandlung ist aber ein bestimmter Standard einzuhalten, damit es nicht zu Ablösungen des Systems kommt. Da Silikon aber nicht abbaubar ist, sind Silikonpartikel in Dockabwässern auszufällen und als Feststoff zu entsorgen. Dies gilt auch für Teflonbeschichtungen. Telfonpartikel sind ebenfalls sehr schwierig zu entsorgen.

Weiterhin unterscheidet man zwischen unlöslichen und löslichen Beschichtungen. Die unlöslichen Antifouling-Beschichtungen werden auch als "Kontakttyp" bezeichnet und weisen eine hohe Abriebfestigkeit auf. Lösliche Antifouling-Beschichtungen sind selbsterodierend und werden von strömendem Wasser langsam abgetragen, sodass sich ihre Schichtstärke verringert. Je nach Kunststoffbasis werden die Biozide ausgespült, an der erodierenden Oberfläche präsentiert oder im Wasser gespalten. Bekannte Antifouling-Beschichtungen verhindern durch ihre Biozide, die wie Schädlingsbekämpfungsmittel wirken, die Besiedlungsphase des Foulingprozesses. Bei den Bioziden unterscheidet man die metallorganischen Biozide, wie beispielsweise die Breitbandgifte Arsen, Kupfer und Tributylzinn (TBT), und die natürlichen Biozide, mit denen viele maritime Organismen ihre Oberfläche gegen Biofouling schützen. Schon geringe Konzentrationen der Breitbandspektrumgifte verursachen allerdings langfristig Umweltschäden. Bekanntlich ist Tributylzinn (TBT) eines der giftigsten Chemikalien, welches als Biozid bei der Herstellung von Unterwasserschiffsanstrichen noch bis zu dem 31. Dezember 2002 eingesetzt werden durfte. Nach der Verabschiedung der Antifouling-Konvention der IMO dürfen ab dem 1. Januar 2003 organozinnhaltige Antifoulingsysteme nur noch mit Sealern versiegelt verwendet werden. Auf den Sealern muß eine nachweislich organozinnfreie Antifouling-Beschichtung vorhanden sein. Es gibt nun bereits TBT-freie Antifoulings, die seit zwei Jahren auf dem Markt sind und auf lange Sicht angeboten werden. TBT-freie selbstpolierende Antifoulings mit einer Standzeit von 60 Monaten basieren vor allem auf Kupfer und Zinkverbindungen. Die Kupferantifoulings gewährleisten aber nur eine maximale Bewuchsschutzdauer von 36 Monaten.

Aufgrund der strengeren Gesetzgebung im Rahmen der oben erwähnten sogenannten Biozidrichtlinie wächst nun der Bedarf an nicht-toxischen Verwuchsschutzmethoden.

Aus der DE-OS 198 36 076 ist eine biozidfreie Antifouling-Beschichtung bekannt, die auf zwei Komponenten beruht, die umweltneutrale Selbstreinigungseigenschaften aufweisen und für eine hydrodynamische Oberfläche mit geringem Reibungswiderstand sorgen. Der Antifouling-Effekt beruht dabei auf der Bildung eines Oberflächengels. Ein Gelbildner als Reinigunskomponente wird anstelle von umweltschädlichen Bioziden ohne Verwendung von artfremden Trägersubstanzen eingesetzt. Die Bereitstellung des Gelbildners wird dabei von einer abbaubaren Gelmatrix als Fixationskomponente übernommen, die mit dem Gelbildner in einer Suspension homogen vermischt ist. Beide Komponenten werden in einem gemeinsamen Arbeitsgang auf die zu schützende Unterwasserfläche aufgebracht, dabei ist die flächige Anhaftung der turbulenten Umströmung ausgesetzt. Die Wirkung der Reinigungskomponente, die durch die Abbaubarkeit der Fixationskomponente ständig auf der Unterwasserfläche zur Verfügung gestellt wird, entfaltet sich vor allem bei Kontakt mit den Schleimstoffen des Wassers oder des Bewuchses. Die Foulingstoffe des Wassers und der Foulingorganismen bilden dann ein Gel auf der Antifouling-Beschichtung, das jedoch bei turbulenter Umströmung nicht standfest ist. Durch das Abwaschen kommt es zu einem Stoffverlust von beiden Komponenten, durch den die Beschichtung langsam aufgebraucht wird, sodass eine periodische Erneuerung erforderlich ist. Der Stoffverlust ist dabei um so größer, je stärker die auftretenden Wasserströmungen sind.

Aus der EP 0 903 389 A1 sind weiterhin biozidfreie Antifouling-Beschichtungen mit umweltneutralen selbstreinigungs- und hydrodynamischen Oberflächeneigenschaften für unterströmte Unterwasserflächen bekannt, wobei diese Antifouling-Beschichtung als duales Kompositsystem aufgebaut ist, bei dem eine Fixationskomponente eine gute Anbindungsfähigkeit an die Unterwasseroberfläche aufweist und als porenformende Komponente in Form eines nanoskaligen, unregelmäßigen Reliefs sich überlappender Poren mit den Parametern Porengröße, -tiefe und -dichte und die Reinigungskomponente als porenfüllende Komponente in Form eines flächigen Reinigungsfilms ausgebildet ist, wobei dieser unregelmäßig von einzelnen Porenstegen punktförmig durchstochen wird.

Die in der EP 0 903 389 A1 beschriebene Antifouling-Beschichtung übt ihren selbstreinigenden Effekt allerdings nur bei Fortbewegung, z. B eines Schiffes aus. Bei Standzeiten werden allerdings die Ablagerung von organischen Foulingstoffen nur sehr geringfügig vermieden, sodass das Konzept der EP 0 903 389 A1 bei fest im maritimen Umfeld sich befindenden Gegenständen nur sehr schlecht wirkt. Außerdem ist die beschriebene Antifouling-Beschichtung sehr kostspielig.

CN 1421351 A beschreibt Schiffskörper aus einem textilen Flächengebilde aus Basaltfasern, modifiziert, d. h. imprägniert mit Phenol oder Epoxyharz und einer äußeren auflaminierten Kupferfolie. Ablagerungen von organischen Foulingstoffen werden möglicherweise durch die äußere Kupferschicht erzielt.

Daher besteht in der Industrie ein großer Bedarf an alternativen, nicht toxischen Bewuchsschutzmethoden.

Es ist daher Aufgabe der vorliegenden Erfindung neuartige biozidfreie Antifouling-Beschichtungen vorzusehen, welche den Bewuchs von Schiffsrümpfen; Offshoreanlagen, Unterwasserseekabeln und anderen sich im Wasser befindlichen Gegenständen deutlich reduzieren, bzw. sogar verhindern.

Diese Aufgabe wird erfindungsgemäß durch die Verwendung von mineralischen Fasern oder Filamenten und von E-Glasfasern mit einem SiO₂-Anteil von mehr als 50 Gew.-% in Form eines textilen Flächengebildes als biozidfreies Antifoulingmittel zum Schutz von Submersstrukturen gegen Schäden aufgrund von Adhäsion und Vermehrung von im Wasser lebenden Schadorganismen in Meereswasser oder in industriellen Wassersystemen, wobei die Oberfläche des Antifoulingmittels überwiegend von feinen Basaltfasern gebildet wird.

Die erfindungsgemäßen textilen Flächengebilde können in Form eines Geleges, Gewebes, Gewirkes oder Gestrickes, eines in Multiaxialtechnik ausgebildetes Flächengebilde oder als Vlies ausgebildet sein. Falls die erfindungsgemäßen Flächengebilde in Form eines Gewirkes vorliegen, können aus den Basaltfasern auch kettengewirkte Netze für die Aquakultur hergestellt werden. Diese relativ feinen engmaschigen Netze werden von der Bindung her in erster Linie auf eine hohe Laufmaschensicherheit ausgelegt. Die Grundstruktur dieser Netze sind sogenannte Rechts/Rechtskettengewirkte Netze. Diesbezüglich wird auf die DE 198 57 993 C2 verwiesen.

Falls das erfindungsgemäße Flächengebilde eine Beschichtung ist, kann sie mittels Klebern oder anderen chemisch haftenden Produkten auf das zu schützende Substrat, d. h. die zu schützende Unterwasserfläche aufgebracht werden. Eine andere Möglichkeit besteht darin, dass das textile Flächengebilde durch Ummanteln und mit schmäleren Geweben oder Bändern bzw. durch Geflechte auf das Substrat wie z. B. die Oberfläche von Schiffsstrukturen etc. aufgebracht ist.

Gemäß einer vorteilhaften Ausführungsform der Erfindung werden Basaltfasern und/oder Basaltfilamente eingesetzt.

Die erfindungsgemäß verwendeten mineralischen Fasern enthalten mehr als 50 Gew.-% SiO₂, bevorzugt mehr als 55 Gew.-% SiO₂. Die in einer besonderen Ausführungsform verwendeten Basaltfasern haben vorzugsweise einen hohen Al₂O₃ Gehalt, z. B. einen Al₂O₃ Gehalt von höher als 16 Gew.-% und einen niedrigen CaO, MgO Gehalt, z. B. ein CaO, MgO Gehalt von weniger als 8 Gew.-%, z. B. zwischen 5 und 8 Gew.-%.

Demgegenüber weisen die erfindungsgemäß eingesetzten E-Glasfasern einen SiO₂ Gew.-% Anteil von 55 Gew.-% und einen Al₂O₃ Anteil von 15 Gew.-% auf. Der CaO, MgO Anteil liegt sehr hoch, z. B. zwischen 18 und 24 Gew.-%.

Die erfindungsgemäß eingesetzten Basaltfasern sind endlosgezogene Basaltfasern und werden typischerweise aus einer Basaltschmelze in großtechnischem Maßstab gewonnen und weisen eine Temperaturbeständigkeit von bis zu 600°C auf. Verfahren zur Herstellung von Basaltfasern werden zum Beispiel in DE 29 09 148 A sowie in DE 35 09 424 A1 beschrieben. Die erfindungsgemäß eingesetzten Basaltfasern weisen eine thermische Beständigkeit im Bereich von mindestens -260°C bis +600°C auf, haben eine Sinterungstemperatur von 1050°C, eine Wärmeleitzahl von 0,031 bis 0,038 K. Bei den physikalischen Eigenschaften weisen sie einen Faserdurchmesser von 7 bis 17 µm auf sowie einen Tex von 28 bis 120. Das spezifische Gewicht beträgt 2,6 bis 2,8 kg/dm³. Die chemischen Eigenschaften nach Gewichtsverlust von 3 Stunden bei Behandlung in kochendem Wasser sind 1,6%; bei Behandlung in 2 n NaOH 2,75% und in 2 n HCl 2,2%.

Die erfindungsgemäße, als Antifouling-Beschichtung eingesetzte Konstruktion ist insbesondere als Gewebe, Gewirke oder als Geflecht, oder in Mulitaxialtechnik bzw. Einlegetechnik ausgebildet. Eine zusätzliche Vernadelung von Fasern bzw. Filamenten von Fasermaterialien im exponierten Bereich ist ebenfalls möglich. Das Flächengebilde kann aber auch ein Vliesstoff von Fasern und Fasermaterial sein, welches aus Basaltfasern hergestellt ist.

Wie oben erwähnt ist, kommen erfindungsgemäß als geeignete Materialien für Kette und Schuß Basaltfasern in Betracht. In einer besonderen Ausführungsform besteht das erfindungsgemäße Gewebe aus miteinander verwebten Strängen von Kett- und Schußfäden in mehrlagiger Form. Der Kettfadenstrang besteht aus einer Vielzahl einzelner paralleler Filamente. Der Schußfadenstrang ebenfalls aus einer Vielzahl paralleler Filamente. Die einzelnen Kett- und Schußfäden liegen streng parallel zueinander und bilden ein in sich geschlossenes Gewebe von geringer Dicke. Um der Gewebekonstruktion eine Festigkeit zu verleihen, wurden die Kett- und Schußfäden an verschiedenen Bindungs- und Verknüpfungspunkten bindungstechnisch verbunden. Weiterhin ist aber auch Leinwand- oder Körperbindung als auch Dreherbindung möglich.

Die erfindungsgemäß eingesetzte Antifouling-Beschichtung kann auf Beton/Stahl oder sonstigen Konstruktionen wie Kabeln, Ketten oder Seilen durch Ummanteln mit schmäleren, handelbaren Geweben oder Bändern bzw. durch Geflechte oder durch spezielle Gewirke aufgebracht werden.

Alternativ kann das Gewebe auf die umströmte Unterwasserfläche mittels Kleber, wie z. B. Epoxyklebern, Zwei-Komponetenklebern, Schmelzklebern oder mit anderen Beschichtungen aufgebracht sein.

Die vorliegende Erfindung beruht auf der überraschenden Feststellung, dass Basaltfasergewebe von Muscheln, Seepocken, aber auch von Algen kaum bewachsen wird.

Die Erfindung ist weiter in den Ansprüchen definiert.

Die erfindungsgemäß eingesetzten Basaltfasern verbinden zwei Vorteile von Kunststoff- und Hanffasern: Basaltfasern sind ein Naturprodukt, die aber keinem schnellen biologischen Abbau unterliegen. Der Rohstoff ist in großen Mengen vorhanden, was das Produkt auch relativ preisgünstig macht, zumal es sich um eine Einkomponentenherstellung handelt. Die Beständigkeit gegenüber chemischen und mechanischen Einflüssen ist hoch.

Die erfindungsgemäße Applikation erfolgt insbesondere in Form von gewebten Matten und nicht mittels Einzelfasern wie bei den Kunstfasern. Dabei sind unterschiedliche Webtechniken und Gewebestärken möglich. Bei den erfindungsgemäßen Versuchen wurde zunächst ein 80 tex Gewebe (Platte 1) und ein 600 tex Gewebe (Platte 2) getestet. Nach der ersten Inspektion dieser Platten wurde zusätzlich ein 100 tex Gewebe auf einem PVC-Rohr ausgelagert.

Die Erfindung wird nun anhand von mehreren Beispielen näher erläutert, ohne sie jedoch darauf einzuschränken.

### Beispiel 1

### Testplatte 1 mit 80 tex Gewebe

Platte 1 wurde mit einem 80 tex Gewebe versehen, das mit einem Epoxykleber "aufgeklebt" wurde. Da die Fasern ein extrem niedriges Aufnahmevermögen für Wasser und andere Flüssigkeiten aufweisen, quoll das gelierte Epoxy durch das Gewebe an die Oberfläche und härtete dort aus. Dadurch waren die Fasern an der Testoberfläche fast vollständig mit Epoxy verklebt. Frei bewegliche Fasern traten nur noch sehr vereinzelt auf. Dennoch wurde diese Platte am 24. April im Norderneyer Hafen ausgelagert (Tab. 1).

### Beispiel 2

### Tesstplatte 2 mit 600 tex Gewebe

Platte 2 wurden zur gleichen Zeit appliziert und ausgelagert (Tab. 1). Hier wurde ein schwerer 600 tex Zwirn aufgebracht, um herauszufinden, ob die Gewebestärke die Effektivität beeinflusst. Durch dieses dickere Gewebe war weniger Epoxy an die Oberfläche gedrungen. Die Einzelfasern waren nur teilweise verklebt.

### Beispiel 3

### Teströhre mit 100 tex Gewebe

Durch die absehbaren Schwierigkeiten bei der Applikation der Gewebematten auf Schiffsrümpfen wurde mit einem weiteren Testmuster (100 tex) ein PVC-Rohr ummantelt. Hintergrund dieser Überlegung war die sich abzeichnende Anwendungsmöglichkeit als Bewuchsschutz auf Unterwasserkabeln und -röhren, z.B. im Zusammenhang mit Offshore-Windkraftanlagen. Die Testmatte wurde mit beidseitig klebendem Klebeband und Kabelbindern am Rohr befestigt, so dass die Fasern nicht verkleben konnten. Am 28. Juli wurde dieses Testmuster ausgelagert (Tab. 1).

### Beispiel 4 und 5

### Testplatten 3 und 4

Aufgrund der Schwierigkeiten bei der Applikation der Gewebe bei den Platten 1 und 2 wurden zwei weitere Testplatten hergestellt. Dabei wurden die Gewebe lose um die Platten gespannt und mit Epoxy-Klebebändem bei 220° aufgebügelt. Platte 3 (100 tex einfach) erhielt auf der Vorderseite einen Epoxy-Streifen mittig unter dem Gewebe. Rückseitig wurde ein Streifen auf das Gewebe kaschiert. Platte 4 (100 tex als Zwirn) erhielt auf der Rückseite vollflächig die Epoxy-Klebebänder. Die beiden Enden des Gewebemusters überlappen sich in der Plattenmitte ohne zusätzliches Klebeband.

Beide Platten wurden am 1. Oktober ausgelagert (Tab. 1). Ziel war es primär, die Beständigkeit des Epoxy-Kleberbandes und des Gewebes bei dieser Applikationsmethode zu überprüfen.

**Tabelle 1: Daten der Basaltfaser-Testmuster**

| Testobjekt | Testsystem | Applikation | Auslagerung |
|---|---|---|---|
| Platte 1:20x40 cm | 80 tex Gewebe | April 2003 | 24.04.2003 |
| Platte 2:15x30 cm | 600 tex Zwirn-Gewebe | April 2003 | 24.04.2003 |
| PVC-Rohr 11 x60cm | 100 tex Zwirn-Gewebe | Juli 2003 | 28.07.2003 |
| PlatteS: 15x30 cm | 100 tex Gewebe | September 2003 | 01.10.2003 |
| Platte 4:15x30 cm | 100 tex Zwirn-Gewebe | September 2003 | 01.10.2003 |

### Testergebnisse

### Testplatten

Nach 22 Wochen Exposition im Nordemeyer Hafenwasser wurden die Platten 1 und 2 sowie das Rohrmuster inspiziert. Dabei wurde neben der fotographischen Dokumentation der Bedeckungsgrad der Bewuchsgruppen nach Richtlinie STG 2221 bestimmt (SCHIFFSBAUTECHNISCHE GESELLSCHAFT 1992) und eine taxonomische Auswertung des Bewuchses vorgenommen.

### Testplatte 1 mit 80 tex Gewebe.

Platte 1 war nach 22 Wochen Exposition stark bewachsen. Miesmuscheln bedeckten am 29. September fast die Hälfte der Testfläche und Seepocken weitere 20%. Die verbleibende Oberfläche war von einem relativ dicken Biofilm überzogen. Es muss berücksichtigt werden, dass nicht das Basaltgewebe, sondern der durchgedrungene Epoxykleber größtenteils die Oberfläche gebildet hat.

Die nur mit Korrosionsschutz versehene Rückseite der Platte 1 diente als Kontrolle. Erwartungsgemäß war der Bewuchs hier stärker: 70% der Oberfläche waren von Seepocken besiedelt. Diese waren sekundär von Miesmuscheln überdeckt worden, die 80% der Oberfläche bedeckten. Demzufolge blieb wenig Platz für weitere Bewuchsorganismen. Tunikaten bedeckten deshalb nur 5% der Oberfläche.

### Testplatte 2 mit 600 tex Gewebe

Auf dieser Platte wurde die Oberfläche überwiegend von freien Basaltfasern gebildet. Die Bewuchsentwicklung verlief gegenüber Platte 1 deutlich verzögert. Bei der Fotoinspektion am 16. Juli war Platte 1 bereits stark mit Muscheln bewachsen, während Platte 2 besonders im mittleren Bereich noch frei von makroskopischem Bewuchs (Muscheln, Seepocken, Makroalgen) war und lediglich einen Biofilm aus Mikroalgen aufwies. Bei einer zusätzlichen Fotoinspektion am 4. August hatte der Makrobewuchs zugenommen, der mittlere Bereich der Platte war aber noch immer frei von hartschaligem Bewuchs (Muscheln, Seepocken).

Bei der Abschlußinspektion am 29. September hatte sich der Tunikat *Styela* clava in großen Mengen angesiedelt und bedeckte 50% der Oberfläche. Dabei hatte er sich überwiegend epibionthisch auf Seepocken angesiedelt, aber auch basibionthisch auf der Gewebeoberfläche. Zwischen den Tunikaten, Muscheln und Seepocken gab es aber noch immer Bereiche, die nur von Mikroalgen bedeckt waren.

### Teströhre mit 100 tex Gewebe

Das Testrohr wurde am 28. Juli ausgelagert und vereinbarungsgemäß in Abständen von 1-2 Wochen fotografiert. Die Bilder verdeutlichen die Bewuchsentwicklung sehr anschaulich. Nach einer Woche hatte sich eine einzelne Seenelke *(Metridium senile)* auf dem Basaltgewebe angesiedelt. 1 Woche später war ein dünner Biofilm sichtbar und vereinzelt hatten sich junge Seepocken angesiedelt. Nach 4 Wochen Exposition hatte die Seepockenbedeckung nicht zugenommen, aber junge Hydrozoen hatten sich angesiedelt. Nach 5 Wochen wurde zum ersten Mal der Tunikat *Botryllus schlössen* nachgewiesen. 2 Wochen später hatten sich vereinzelt auch Tunikaten der Art *Molgula citrina* angesiedelt. Bei der vorerst letzten Inspektion am 26. September nach mehr als 8 Wochen Exposition war der Seepockenbewuchs noch immer sehr gering (2%). Auffällig war auch, dass die Seepocken deutlich kleiner waren als auf den Kabelbindern des Rohrs. Offensichtlich haben die Seepocken auf "intaktem", beweglichem Faseruntergrund Schwierigkeiten bei Ansiedlung und Wachstum. Miesmuscheln wurden nicht angetroffen, was aber am späten Auslagerungstermin gelegen hat. Miesmuscheln haben einen Brutfall im Frühjahr, der in diesem Jahr extrem stark ausgefallen ist. Es kann noch einen schwächeren Brutfall im Spätsommer geben, der in diesem Jahr scheinbar nicht stattgefunden hat. Somit machten die Hydrozoe *Laomedea flexuosa* (10%) und der Tunikat *Botryllus schlosseri* (10%) den Großteil des Makrobewuchses aus. 50% der Oberfläche waren frei von sichtbarem Bewuchs und 25% waren nur von Mikroalgen bedeckt.

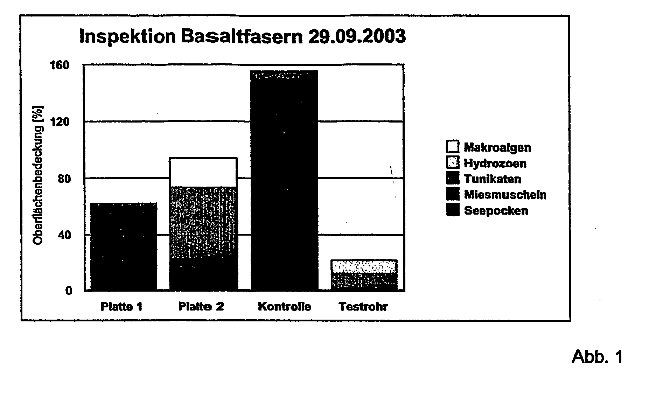

- **Abb. 1:**: Aufwuchsbedeckung [%] der Testplatten 1 und 2 mit Kontrolle (22 Wochen Exposition) und des Testrohres (8 Wochen Exposition)

### Diskussion

### Testplatte 1 mit 80 tex Gewebe

Auf Testplatte 1 (80 tex) hat das Epoxy die Fasern verklebt. Dies hat einen Antifoulingeffekt verhindert.

### Testplatte 2 mit 600 tex Gewebe

Das 600 tex Gewebe auf Platte 2 war an der Oberfläche weniger stark verklebt. Das Ergebnis war eine verzögerte und reduzierte Bewuchsentwicklung im mittleren Bereich der Platte.

### Teströhre mit 100 tex Gewebe

Als erster Vorversuch wurde ein PVC-Testrohr mit einem 100 tex Gewebe ummantelt und ausgelagert. Dieses Testmuster erzielte ein sehr zufriedenstellendes Ergebnis, allerdings bei einer jahreszeitlich relativ späten Auslagerung und einer kurzen Expositionsdauer von 8 Wochen. Nichtsdestotrotz kann anhand des Bewuchses auf den Kabelbindern und dem Senkgewicht festgestellt werden, dass der Seepockenbewuchs reduziert wurde. Hydrozoen siedelten sich zahlreich an, erreichten aber keine große Biomasse.

Die Ergebnisse von Testplatte 2 beweisen, dass die Basaltfasern eine Verzögerung und Reduzierung der Bewuchsentwicklung bewirken: Miesmuscheln meiden die Faseroberfläche, Seepocken siedeln sich in geringer Dichte an und sind im Wachstum gehemmt.

Die Antifoulingwirkung des erfindungsgemäßen Basaltfasergewebes wird wahrscheinlich durch die Flexibilität der Oberfläche hervorgerufen. Die ansiedlungsbereiten Larven der Bewuchsorganismen erkennen das Gewebe nicht als stabile Oberfläche und meiden es deshalb. Da den Larven nur eine beschränkte Zeit bleibt, eine geeignete Stelle zur Ansiedlung zu finden, werden auch ungünstig erscheinende Oberflächen besiedelt, wenn keine besseren Alternativen zur Verfügung stehen.

Abschließend kann zusammengefaßt werden, dass die vorliegenden Ergebnisse auf eine Verzögerung und Reduzierung des Bewuchses schließen lassen.

Neben der Antifoulingwirkung ist die mechanische Stabilität des Gewebes im Seewasser eine wesentliche Voraussetzung für die Vermarktung. Es gibt bislang keine Anzeichen dafür dass die Stabilität des Gewebes für einen Langzeiteinsatz im Seewasser nicht geeignet ist.

### Literatur

- BIOREGION (2003): ökologische Schiffsfarben. In BioRegioN Newsletter Mai 2003. Seite 14. www.redaktool.de/k989407180/documents/maL03.764_8.pdf
- HOLSTRÖM, C. & S. KJELLEBERG (1994): The effect of external biological factors on settlement of marine invertebrate and new antifouling technology. Biofouling, 8: 147-160.
- SCHIFFSBAUTECHNISCHE GESELLSCHAFT e.V. (1992): STG-Richtlinie Nr. 2221 "Korrosionsschutz für Schiffe und Seebauwerke - Teil 3 Instandhaltung von Korrosionsschutz-Systemen", Hamburg, 36 S.
- Wahl, M., K. Kröger & M. Lenz (1998): Non-toxic protection against epibiosis. Biofouling, 12 (1-3): 205-236.
- DAEHNE. B.. B. WATERMANN, H. MICHAELIS, M. HAASE & J. ISENSEE (2000): Alternativen zu TBT. Erprobung von umweltverträglichen Antifoulinganstrichen auf Küstenschiffen im niedersächsischen Wattenmeer. Abschlussbericht Phase I und II, WWF, Niedersächsisches Umweltministerium, Bremen, 169 S. + 115 S. Anhang.
- WATERMANN, B.. B. DAEHNE. M. WIEGEMANN. M. LINDESKOG & S. SIEVERS (2003): Performance of biocide-free antifouling paints - Trials on deep-sea going vessels. Vol III Inspections and new applications of 2002 and 2003 and synoptical evaluation of results (1998 - 2003). LimnoMar, Hamburg / Nordemey, 125 S.

## Patentansprüche

1. Verwendung von mineralischen Fasern oder Filamenten und von E-Glasfasern mit einem SiO₂-Anteil von mehr als 50 Gew.-%, in Form eines textilen Flächengebildes, als biozidfreies Antifoulingmittel zum Schutz von Submersstrukturen gegen Schäden aufgrund von Adhäsion und Vermehrung von im Wasser lebenden Schadorganismen in Meereswasser oder in industriellen Wassersystemen, wobei die Oberfläche des Antifoulingmittels überwiegend von feinen Basaltfasern gebildet wird und das Flächengebilde als Gelege, Gewebe, Gewirke Gestrick oder Geflecht, ein in Multiaxialtechnik ausgebildetes Flächengebilde oder ein Vlies ausgebildet ist.

2. Verwendung gemäß Anspruch 1, **dadurch gekennzeichnet, dass** das Flächengebilde ein Fischnetz, insbesondere ein knotenloses, kettengewirktes Fischnetz zur Aquakultur, oder eine Antifouling-Beschichtung ist, die auf das zu schützende Substrat bzw. auf zu schützende Unterwasserflächen aufgebracht ist.

3. Verwendung gemäß einem der Ansprüche 1 oder 2, **dadurch gekennzeichnet, dass** das textile Flächengebilde mittels Klebern oder anderen chemisch haftenden Produkten auf das Substrat bzw. auf die zu schützende Unterwasserfläche oder das textile Flächengebilde auf das zu schützende Substrat bzw. auf die Unterwasserfläche durch Ummanteln mit schmäleren Geweben oder Bändern bzw. durch Geflechte aufgebracht ist.

4. Verwendung gemäß einem der Ansprüche 1 bis 3, **dadurch gekennzeichnet, dass** als mineralische Fasern oder Filamente Basaltfasern oder Basaltfilamente verwendet werden

5. Verwendung gemäß einem der Ansprüche 1 bis 4, **dadurch gekennzeichnet, dass** das Flächengebilde einen Kantenschutz entlang den Rändern des Flächengebildes aufweist.

6. Verwendung gemäß einem der Ansprüche 1 bis 5, wobei das Gewebe aus Kett- und Schußfäden, jeweils aus Basaltfasern, besteht.

7. Verwendung gemäß einem der Ansprüche 1 bis 6, wobei für das Gewebe Rovings und Garne mit einer Feinheit von 50 bis 3000 tex, insbesondere von 50 bis 500 tex verwendet werden und die aus den Garnen hergestellten Gewebe ein Flächengewicht von 70 bis 1500 g/m², insbesondere von 90 bis 200 g/m², aufweisen.

8. Verwendung gemäß einem der Ansprüche 1 bis 7, wobei das Gewebe aus mehreren Schichten oder Lagen besteht und webtechnisch als auch mit Steppnähten mechanisch verfestigt ist, wobei die Steppnähte mit einem Nähfaden ausgeführt sind.

9. Verwendung gemäß einem der Ansprüche 1 bis 8, wobei die Schichten des Flächengebildes mittels Klebetechnologie, insbesondere mittels Schweißklebeband und/oder mittels Klebepulver, miteinander verbunden sind.

10. Verwendung gemäß einem der Ansprüche 1 bis 9, wobei das Fadenmaterial aus Zwirnen/Mehrfachgarnen besteht.

11. Verwendung gemäß einem der Ansprüche 1 bis 10, wobei das Fadenmaterial einem Texturierprozeß unterworfen wurde.

## Claims

1. Use of mineral fibres or filaments and of E-glass fibres with an SiO₂ content of more than 50 % by weight in the form of a textile fabric, as a biocide-free anti-fouling agent for the protection of submerged structures from damage as a result of adhesion and the propagation of aquatic pest organisms in seawater or in industrial water systems, wherein the surface of the anti-fouling agent is formed predominantly from fine basalt fibres, and the fabric is constructed in the form of a layered-roving fabric, a woven fabric, a knitted fabric, a knotted fabric or a braided fabric, a fabric formed in multiaxial technology or a non-woven fabric.

2. Use according to Claim 1, **characterized in that** the fabric is a fish net, in particular a warp-knitted fish net without knots for aquaculture, or an anti-fouling coating which is applied to the substrate to be protected or to underwater surfaces to be protected.

3. Use according to one of Claims 1 or 2, **characterized in that** the textile fabric is applied by means of adhesives or other chemically adhering products to the substrate or to the underwater surface to be protected, or the textile fabric is applied to the substrate to be protected or to the underwater surface by encasing with narrower woven fabrics or bands or by braided fabrics.

4. Use according to any one of Claims 1 to 3, **characterized in that** basalt fibres or basalt filaments are used as the mineral fibres or filaments.

5. Use according to any one of Claims 1 to 4, **characterized in that** the fabric has an edge protection along the borders of the fabric.

6. Use according to any one of Claims 1 to 5, wherein the woven fabric consists of warp threads and weft threads, of basalt fibres in each case.

7. Use according to any one of Claims 1 to 6, wherein rovings and yarns with a fineness of from 50 to 3000 tex, in particular from 50 to 500 tex, are used for the woven fabric, and the woven fabrics produced from the yarns have a weight *per* unit area of from 70 to 1500 g/m², in particular from 90 to 200 g/m².

8. Use according to any one of Claims 1 to 7, wherein the woven fabric consists of a plurality of strata or layers and is mechanically strengthened by weaving as well as with quilting seams, wherein the quilting seams are formed with a sewing thread.

9. Use according to any one of Claims 1 to 8, wherein the strata of the fabric are connected to one another by means of adhesion, in particular by means of welding adhesive tape and/or by means of adhesive powder.

10. Use according to any one of Claims 1 to 9, wherein the thread material consists of twines / multiple yarns.

11. Use according to any one of Claims 1 to 10, wherein the thread material has been subjected to a texturizing process.

## Revendications

1. Utilisation de filaments minéraux ou de fibres minérales et de fibres de verre de type E ayant une teneur en SiO₂ de plus de 50 % en poids, sous forme d'un corps plan textile, en tant qu'agent anti-encrassement exempt de biocide pour la protection de structures sous-marines contre les dommages dus à l'adhésion et à la multiplication d'organismes nuisibles vivant dans l'eau, présents dans l'eau de mer ou dans des systèmes aqueux industriels, la surface de l'agent antisalissure étant essentiellement constituée de fines fibres de basalte et le corps plan étant conçu sous forme de nappe, tissu, tricot à mailles, ou treillis, d'un corps plan formé dans la technique multiaxiale ou d'un non-tissé.

2. Utilisation selon la revendication 1, **caractérisée en ce que** le corps plan est un filet de pêche, en particulier un filet de pêche énoué tricoté sur métier à chaîne pour l'aquaculture, ou est un revêtement anti-encrassement qui est appliqué sur le support à protéger ou sur des surfaces sous-marines à protéger.

3. Utilisation selon la revendication 1 ou 2, **caractérisée en ce que** le corps plan textile est appliqué, au moyen de colles ou d'autres produits adhérant chimiquement, sur le support ou sur la surface sous-marine à protéger ou le corps plan textile est appliqué sur le support à protéger ou sur la surface sous-marine par enveloppement avec des tissus plus étroits ou des bandes ou bien au moyen de treillis.

4. Utilisation selon l'une quelconque des revendications 1 à 3, **caractérisée en ce qu'**on utilise en tant que filaments minéraux ou fibres minérales des filaments de basalte ou des fibres de basalte.

5. Utilisation selon l'une quelconque des revendications 1 à 4, **caractérisée en ce que** le corps plan présente une protection des bords le long des bords du corps plan.

6. Utilisation selon l'une quelconque des revendications 1 à 5, dans laquelle le tissu consiste en fil de trame et fil de chaîne, chacun à base de fibres de basalte.

7. Utilisation selon l'une quelconque des revendications 1 à 6, dans laquelle on utilise pour le tissu des fils et stratifils ayant une finesse de 50 à 3 000 tex, en particulier de 50 à 500 tex, et les tissus fabriqués à partir des fils présentent un poids par unité de surface de 70 à 1 500 g/m², en particulier de 90 à 200 g/m².

8. Utilisation selon l'une quelconque des revendications 1 à 7, dans laquelle le tissu est constitué de plusieurs couches ou jets et est consolidé lors du tissage ainsi que mécaniquement par des coutures piquées, les coutures piquées étant effectuées avec un fil à coudre.

9. Utilisation selon l'une quelconque des revendications 1 à 8, dans laquelle les couches du corps plan sont assemblées entre elles par une technique de collage, en particulier au moyen d'un ruban adhésif de scellage et/ou au moyen de poudre adhésive.

10. Utilisation selon l'une quelconque des revendications 1 à 9, dans laquelle le matériau fibreux consiste en fils multiples/retors.

11. Utilisation selon l'une quelconque des revendications 1 à 10, dans laquelle le matériau des fils a été soumis à un processus de texturation.
